# EUROPEAN PATENT SPECIFICATION

(11) **EP 2 033 860 B1**
(45) Date of publication and mention of the grant of the patent: **26.05.2010**
(21) Application number: 07017588.0
(22) Date of filing: 07.09.2007
(51) Int. Cl.: B60R 25/10

(54) **Calling-help warning device with a third brake light of an automobile**
Rufhilfe-Warnvorrichtung mit einem dritten Bremslicht eines Kraftfahrzeugs
Dispositif d'avertissement d'aide d'appel avec le troisième feu de stop d'une automobile

(43) Date of publication of application: 11.03.2009
(73) Proprietor: Yung Chan Electrical Instrument Co., Ltd., Tainan City (TW)
(72) Inventor: Pin-Ying YU, Tainan City (TW)
(74) Representative: Kandlbinder, Markus Christian

(56) References cited:
- WO-A-99/08910
- US-A1- 2005 162 260

## Description

### BACKGROUND OF THE INVENTION

### 1. Field of the Invention

This invention relates to a calling-help warning system of a third brake light of an automobile, particular to one enabling the third brake light to keep on flashing to warn people thereabout that the car is broken in illegally, asking for help.

### 2. Description of the Prior Art

Commonly, an automobile anti-burglar device is used as a warning means for protecting a car from stolen. It is based on the pressure detected in a car, supersonic induction, the vibrating induction posed by improper touching or shock, or induction of illegally opening a door to warn or send an owner a message that the car is being intruded. But, due to some reasons such as that the warning sound is too low to frighten the thief, the owner is too far away to get the message, or the owner can not reach the car in time, so the car cannot be effectively prevented from being robbed.

Document US 2005/0162260 A discloses the preamble of claim 1.

### SUMMARY OF THE INVENTION

The objective of this invention is to offer a calling-help warning system activated by a remote controller. With an inductor in the calling-help warning device, as soon as a car is intruded by a burglar, a third brake light can be lit up to keep on flashing to warn people thereabout for help.

The main features of the invention are defined by the subject-matter of claim 1.

### BRIEF DESCRIPTION OF DRAWINGS

This invention is better understood by referring to the accompanying drawings, wherein:
Fig. 1 is a circuit block diagram of a calling-help warning system of a third brake light of an automobile in the present invention;
Fig. 2 is a schematic view of the calling-help warning system of a third brake light of an automobile in the present invention being in use; and,
Fig. 3 is another schematic view of the calling-help warning system of a third brake light of an automobile in the present invention being in use.

### DETAILED DESCRIPTION OF THE PREFERRED EMBODIMENT

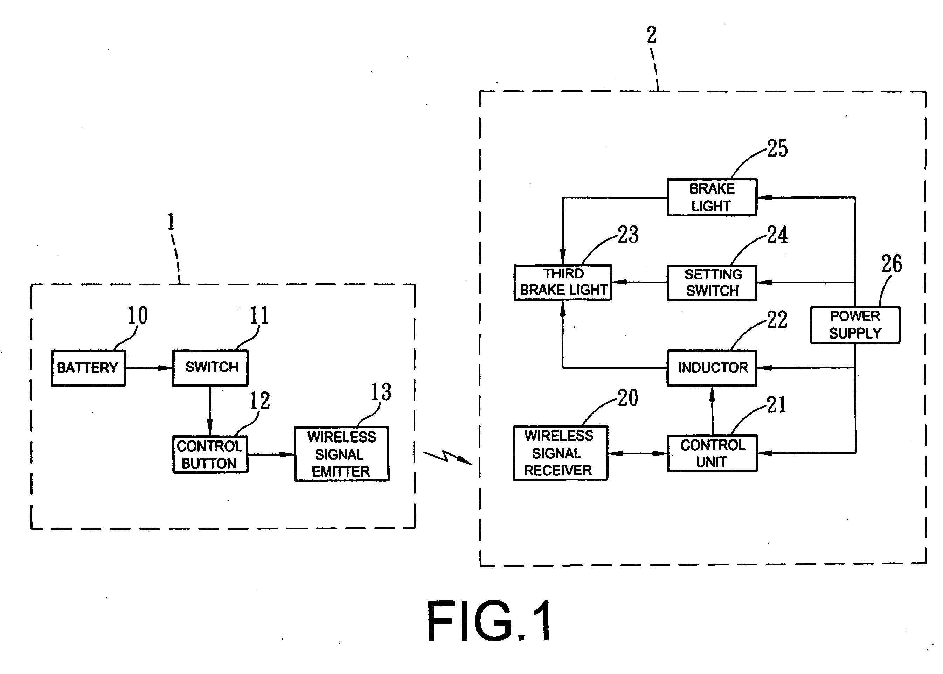

As shown in Fig. 1, a preferred embodiment of a calling-help warning system of a third brake light of an automobile in the present invention is composed of a remote controller 1 and a calling-help warning device 2.

The remote controller 1 is provided with at least one battery 10, a switch 11, a plurality of control button 12 and a wireless signal emitter 13, which are sequentially linked up.

The calling-help warning device 2 is provided with a wireless signal receiver 20 employed for receiving signals sent from the remote controller 1, a control unit 21 connected with the wireless signal receiver 20 for enabling the car to be induced and give a warning, at least one inductor 22 connected with the control unit 21 to detect intrusion or touching with a car, a third brake light 23 connected with the at least one inductor 22 for warning cars traveling behind it or calling for help to warn a burglar, a setting switch 24 connected with the third brake light 23 to turn on/off the third brake light 23, a plurality of brake lights 25 connected with the third brake light 23 for warning cars traveling behind it, and a power supply 26 respectively connected with the control unit 21, the at least one inductor 22, the setting switch 23 and the plurality of brake lights 25 to supply power.

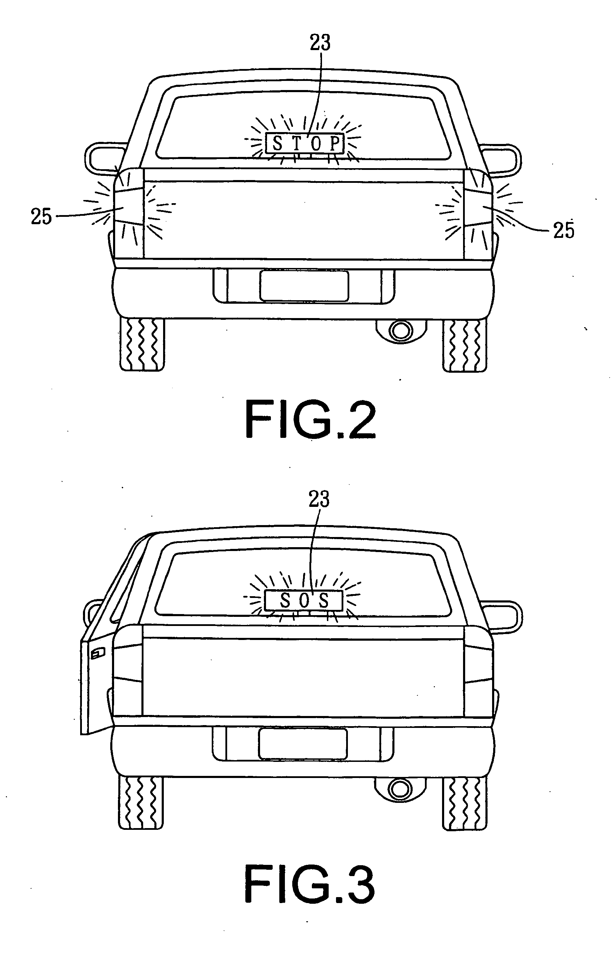

In using, as soon as a driver steps on the brake while traveling, the plurality of brake lights 25 and the third brake light 23 are lit up simultaneously. By the time, the third brake light 23 can be designed to display with characters, such as "STOP", as shown in Fig. 2. If the car is parked, a driver has just to turn on the switch 11 of the remote controller 1 and then, press the plurality of control button 12 to enable the wireless signal emitter 13 to send signals to the wireless signal receiver 20 that is to simultaneously control the control unit 21 to activate the at least one inductor 22. Therefore, if the car is intruded by a thief, the at least one inductor 22 can sense it and activate the third brake light 23 to keep on flashing. By the time, the third brake light 23 can be designed to display with characters such as "SOS", as shown in Fig. 3, to inform people thereabout for help.

## Claims

1. A calling-help warning system as anti-burglar system of a light of an automobile, said system comprising:
a remote controller (1) composed of at least one battery (10), a switch (11), a plurality of control buttons (12) and a wireless signal emitter (13) that are sequentially linked up;
a calling-help warning device (2), activated by signals sent from said remote control (1), comprising:
a wireless signal receiver (20) utilized to receive signals transmitted from said remote control (1);
a control unit (21) connected with said wireless signal receiver (20) for enabling a car to be inducible and warning;
at least one inductor (22) connected with said control unit (21) to detect intrusion or touching with a car;
a light connected (23) with said at least one inductor for warning cars travelling behind it or calling for help to warn the burglar;
a setting switch (24) connected with said light (23) to turn on/off said light;
a plurality of lights (25) connected with said light (23) for warning cars travelling behind it; and
a power supply (26) respectively connected with said control unit (21), said at least one inducer (22), said setting switch (24) and said plurality of brake lights (25) to supply power;
said calling-help warning system is further **characterized by**:
said light for calling for help to warn the burglar is a third brake light (23); and
said switch (11) is turned on and said plurality of control buttons (12) is pressed to enable the wireless signal emitter (13) to send signals to said wireless signal receiver (20) for activating said at least one inductor (22) by said control unit (21).

## Patentansprüche

1. Rufhilfe-Warnsystem auf der Basis eines mit Licht arbeitenden Einbruchssicherungssystems eines Kraftfahrzeugs, umfassend eine Fernsteuerung (1), bestehend wen aus einer Batterie (10), einem Schalter (11), mehreren Steuerknöpfen (12) und einem drahtlosen Signalgeber (13), die aufeinanderfolgend gekoppelt sind; einer Rufhilfe-Warn-Vorrichtung (2), die durch von der Fernsteuerung (1) gesendete Signale aktiviert wird, mit einem drahtlosen Signalempfänger (20), der zum Empfang von Signalen dient, welche von der Fernsteuerung (1) übermittelt werden; einer Steuereinheit (21), die mit dem drahtlosen Empfänger (20) verbunden ist, so daß ein Kraftfahrzeug ermittelt und eine Warnung abgegeben werden kann; wenigstens einer Induktivität (22), die an die Steuereinheit (21) angeschlossen ist, um das Eindringen in ein Kraftfahrzeug oder das Berühren eines Kraftfahrzeugs festzustellen; einem Licht (23), das mit der wenigstens einen Induktivität verbunden ist, um das hinter ihm fahrende Kraftfahrzeug zu warnen oder Hilfe anzufordern, um den Einbruch anzuzeigen; einem Einstellschalter (24), der mit dem Licht (23) verbunden ist, um dieses Licht ein- / auszuschalten; mehreren Lichtern (25), die mit dem Licht (23) verbunden sind, um hinter dem Fahrzeug fahrende Kraftfahrzeuge zu warnen; und einer Stromquelle (26), die an die Steuereinheit (21), die wenigstens eine Induktivität (22), den Einstellschalter (24) und die vielen Bremslichter (25) zwecks Stromzufuhr entsprechend angeschlossen ist, wobei das Rufhilfe-Warnsystem **dadurch gekennzeichnet ist, daß** das Licht zum Hilferuf zur Warnung vor dem Einbrecher ein drittes Bremslicht (23) ist, und daß der Schalter (11) eingeschaltet und die Mehrzahl der Steuerknöpfe (12) gedrückt werden, um dem drahtlosen Signalsender (13) zu ermöglichen, Signale an den drahtlosen Signalempfänger (20) abzugeben, um dadurch die wenigstens eine Induktivität (22) durch die Steuereinheit (21) zu aktivieren.

## Revendications

1. Système d'avertissement et d'appel à l'aide à titre de système antivol associé aux lampes d'une automobile, ledit système comprenant :
une commande à distance (1) composée d'au moins une batterie (10), d'un commutateur (11), d'une pluralité de boutons de commande (12) et d'un émetteur de signaux sans fil (13) qui sont reliés de manière séquentielle ;
un dispositif d'avertissement et d'appel à l'aide (2), activé par des signaux envoyés depuis ladite commande à distance (1) ;
un récepteur de signaux sans fil (20) utilisé pour recevoir des signaux émis depuis ladite commande à distance (1) ;
une unité de commande (21) connectée audit récepteur de signaux sans fil (20) pour permettre à un véhicule d'être activé et de produire des avertissements ;
au moins un inducteur (22) connecté à ladite unité de commande (21) pour détecter une intrusion ou un contact avec un véhicule ;
une lampe (23) connectée audit au moins un inducteur pour avertir les véhicules circulant en arrière ou pour appeler à l'aide et avertir le voleur ;
un commutateur d'activation (24) connecté à ladite lampe (23) pour allumer/éteindre ladite lampe ;
une pluralité de lampes (25) connectées à ladite lampe (23) pour avertir les véhicules circulant en arrière ; et
une alimentation de puissance (26) respectivement connectée à ladite unité de commande (21), audit au moins un inducteur (22), audit commutateur d'activation (24) et à ladite pluralité de lampes de frein (25) pour fournir une puissance ;
ledit système d'avertissement et d'appel à l'aide étant en outre **caractérisé par**
ladite lampe pour appeler à l'aide et avertir un voleur est une troisième lampe de frein (23) ; et
ledit commutateur (11) est mis en marche et ladite pluralité de boutons de commande (12) sont pressés pour permettre à l'émetteur de signaux sans fil (13) d'envoyer des signaux audit récepteur de signaux sans fil (20) pour activer ledit au moins un inducteur (22) par ladite unité de commande (21).
